Europäisches Patentamt

(19) European Patent Office

Office européen des brevets

(11) Numéro de publication : **0 299 884 B1**

(12) **FASCICULE DE BREVET EUROPEEN**

(45) Date de publication du fascicule du brevet :
04.12.91 Bulletin 91/49

(51) Int. Cl.$^5$ : **C09J 7/02, C09J 131/04**

(21) Numéro de dépôt : 88420225.0

(22) Date de dépôt : 28.06.88

(54) **Film souple auto-adhésif de protection temporaire.**

(30) Priorité : 16.07.87 FR 8710334

(43) Date de publication de la demande :
18.01.89 Bulletin 89/03

(45) Mention de la délivrance du brevet :
04.12.91 Bulletin 91/49

(84) Etats contractants désignés :
BE DE ES FR GB IT

(56) Documents cités :
US-A- 2 485 248
US-A- 3 445 263
US-A- 4 379 806
PATENT ABSTRACTS OF JAPAN, vol. 7, no.
191 (C-182)[1336], 20 août 1983; & JP-A-58 93
773 (DAINIPPON INSATSU K.K.) 03-06-1983

(73) Titulaire : **PAPETERIES ELCE Société
Anonyme
7-11 avenue Barthélémy Thimonnier
F-69300 Caluire (FR)**

(72) Inventeur : **Croquelois, Jean Pierre
Villa Sorsenval Allée du dictionnaire
F-01600 Trevoux (FR)**
Inventeur : **Fandard, Philippe
114 rue Hénon
F-69004 Lyon (FR)**

(74) Mandataire : **Laurent, Michel et al
Cabinet LAURENT et CHARRAS, 20, rue Louis
Chirpaz B.P. 32
F-69131 Ecully Cedex (FR)**

## Description

L'invention concerne un nouveau film souple auto-adhésif de protection temporaire.

L'utilisation de films de protection auto-adhésifs à température ambiante sous l'effet d'une simple pression est bien connue. On a déjà proposé plusieurs techniques pour fabriquer de tels films, notamment par enduction-couchage, décharge corona, co-extrusion. La technique par co-extrusion décrite notamment dans le document US-A-4379806, consiste à co-extruder plusieurs couches superposées accolées lors de cette co-extrusion, à savoir notamment :

- l'une de base en matière thermoplastique non collante ;
- l'autre de surface, adhérant fermement à celle de base, auto-adhésive et comprenant au moins une résine collante désignée dans la profession sous l'anglicisme "tackifiante",
- éventuellement collées entre elles par une couche intermédiaire.

Les résines collantes (tackifiantes) ont la facheuse tendance à migrer lors du stockage et ainsi à venir maculer ou tacher les surfaces à protéger.

Dans une forme de réalisation proposée récemment, on a suggéré de co-extruder un mélange polyamide et d'éthylène-vinyl-acétate (EVA). Les films ainsi réalisés ne se sont guère développés, car :

— d'une part, l'EVA contient encore fréquemment des traces d'acide résiduelles qui, à la longue, exsudent et viennent ainsi corroder les métaux qu'ils doivent protéger, ce qui interdit leur utilisation pour la protection des pièces métalliques ;

— et d'autre part, les propriétés adhésives de ces films sont généralement révélées par une opération de chauffage, ce qui nécessite alors de faire appel à un matériel spécial et coûteux.

L'invention pallie ces inconvénients. Elle vise un film de protection auto-adhésif co-extrudé du type en question qui soit facile à mettre en oeuvre, présente d'excellentes propriétés adhésives à température ambiante, puisse être facilement enlevé des surfaces protégées sans laisser de trace.

Ce film souple auto-adhésif perfectionné pour la protection temporaire de surface fragile, du type constitué par au moins deux couches superposées accolées co-extrudées :

— l'une de base, en une composition filmogène de matière thermoplastique ;

— l'autre auto-adhésive, en une composition filmogène d'éthylène-vinyl acétate (EVA), compatible avec le polymère de la couche de base, se caractérise en ce que la couche auto-adhésive est constituée par un copolymère filmogène d'EVA présentant :

- un taux en poids d'acétate de vinyle compris entre 25 et 40% ;

- un indice de fluidité compris entre 20 et 60.

Les copolymères filmogènes EVA et de polymères thermoplastiques notamment en polyéthylène, sont bien connus, spécialement dans le domaine des films d'emballages alimentaires. L'invention consiste d'une part, à avoir coextruder ces films avec un film de base compatible et d'autre part et surtout, à avoir sélectionné des caractéristiques physiques particulières du copolymère EVA qui ainsi, de manière tout fait inattendue, présentent alors des propriétés auto-adhésives à température ambiante permettant la protection temporaire des surfaces diverses et qui d'une part, n'exsudent pas, ne corrodent pas les surfaces protégées et d'autre part, ne laissent pas de trace après enlèvement.

Dans la demande de brevet japonais 60.157859, on a décrit des complexes co-extrudés dont l'une des couches est formée d'EVA présentant un taux d'acétate de vinyle compris entre 5 et 20% et un indice de fluidité de 1 à 15. Ces complexes filmogènes sont thermocollants. Ils peuvent être appliqués à chaud sur des plaques de polyméthylmétacrylate, de polycarbonates ou de PVC pour les protéger provisoirement. L'adhésion s'effectue par ramollissement de la couche d'EVA qui, comme déjà dit dans le préambule, voit ses propriétés adhésives révélées à chaud. Il s'agit d'une structure ayant une composition différente, mettant en oeuvre des fonctions et des concepts différents, en vue d'obtenir des résultats également différents.

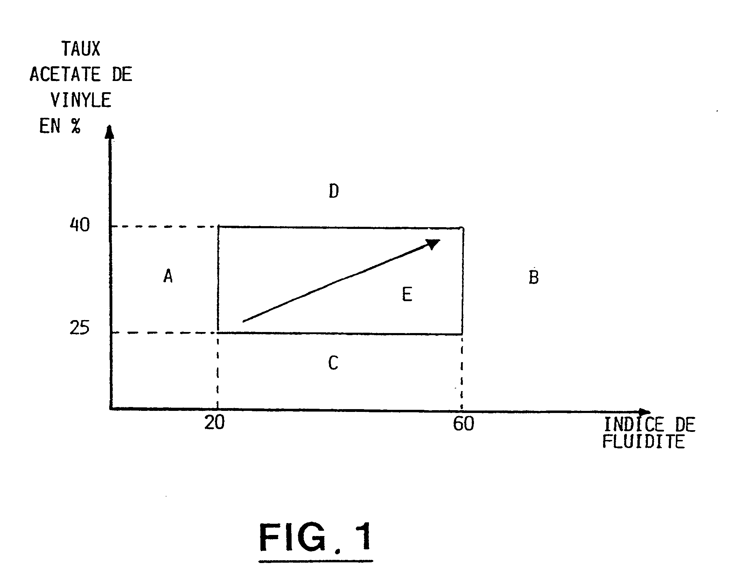

Selon l'invention, et en se référant à la figure unique annexée, il importe que le copolymère d'EVA ait un indice de fluidité (désigné dans le métier par l'expression anglaise "melt index") compris entre 20 et 60, mesuré selon la norme ASTM-D 1238 et de préférence voisin de 40. En effet, on a constaté que si cet indice est inférieur à 20, c'est à dire si l'on se trouve dans la zone référencée A au sein de la figure, les propriétés autoadhésives disparaissent ; de même si cet indice est supérieur à 60, c'est à dire, si l'on se trouve dans la zone référencée B au sein de la figure, le copolymère devient alors difficilement extrudable. Comme déjà dit, on obtient de meilleurs résultats lorsque cet indice est voisin de 40.

De même, toujours selon l'invention, il importe que le copolymère ait un taux en poids d'acétate de vinyle compris entre 25 et 40% et de préférence voisin de 30%. En effet, on a constaté que si ce taux est inférieur à 25%, en d'autres termes si l'on se trouve dans la zone référencée C au sein de la figure, on assiste de nouveau à la disparition des propriétés auto-adhésives ; de même, si ce taux est supérieur à 40%, dans la zone référencée D dans la figure, le film devient poisseux et manque de cohésion interne, exposant les surfaces à protéger aux risques d'être tachées ou maculées.

Il est indispensable de se situer dans la zone référencée E au sein de la figure, c'est à dire dans une zone pour laquelle le pourcentage en poids d'acétate de vinyle est compris entre 25 et 40%, et l'indice de fluidité entre 20 et 60. Il est même préférable d'obtenir un indice de fluidité voisin de 40 et un taux d'acétate de vinyle proche de 30%. En effet, les propriétés auto-adhésives, symbolisées au sein de la figure par la flèche, croissent lorsque l'on augmente simultanément le taux d'acétate de vinyle et l'indice de fluidité, et ce jusqu'aux limites exposées dans les deux paragraphes précédents, montrant ainsi la synergie et l'interréaction existant entre ces deux paramètres.

Avantageusement, en pratique :

— comme déjà dit, l'indice de fluidité est voisin de 40 et le taux d'acétate de vinyle de 30% ;

— l'épaisseur du film de base est compris entre 25 et 150 micromètres ;

— l'épaisseur de la couche co-extrudée auto-adhésive est comprise entre 5 et 25 micromètres et de préférence voisine de 15 micromètres ;

— la couche auto-adhésive peut contenir également des charges ; on peut ajouter par exemple des charges stabilisantes, telles que de l'oxyde de zinc, à raison de 0,5 à 5%, de préférence 2,5% du poids de la couche adhésive ; dans une autre forme de réalisation, on utilise comme charge du sorbate de potassium et ce, dans les mêmes proportions, pour éviter l'apparition dans le temps et surtout à la longue d'un léger voile sur les plaques d'aluminium qui seraient protégées par de tels films ;

— la couche de base en matière thermoplastique non collante peut être réalisée en tout matériau approprié, tel que par exemple polyéthylène basse ou haute densité, polyester linéaire, polypropylène, polyamide, et ce en fonction des applications envisagées.

La manière dont l'invention peut être réalisée et les avantages qui en découlent ressortiront mieux des exemples de réalisation qui suivent, donnés à titre indicatif et non limitatif.

Exemple 1 :

De manière connue, on réalise par co-extrusion un film souple auto-adhésif de protection temporaire à température ambiante.

La première trémie de l'extrudeuse soufflage est alimentée par un polyéthylène basse densité ayant un indice de fluidité de 2, une densité de 0,923 et une température de ramollissement de 94°C et une température de filière comprise entre 160 et 180°C.

La seconde trémie est alimentée par un polymère d'EVA ayant un taux d'acétate de vinyle de 40%, un indice de fluidité de 55 et une température de filière de 120°C.

On obtient ainsi un film dont la couche de base en polyéthylène basse densité est d'environ 35 micromètres fermement accolée à une couche auto-adhésive à température ambiante d'environ 15 micromètres. Ce film co-extrudé adhère parfaitement sur des plaques d'aluminium, d'aluminium anodisé, d'acier inoxydable, de polymétacrylate, de polycarbonate, de verre ou d'autres matières plastiques lamifiées, tout en restant facilement enlevable sans laisser de trace ou autre souillure.

Les échantillons de ces matériaux ainsi revêtus ont été mis en vieillissement accéléré pendant 72 heures sous une pression de 3 kg/cm2 dans une enceinte chauffée à 60°C ayant un taux d'humidité relatif de 65%. On n'a observé aucune perte d'adhérence, aucune trace après enlèvement et aucune action de corrosin.

Exemple 2 :

Par la technique d'enduction dénommée "chill-roll", bien connue en couchage du papier, on co-extrude :

— d'une part, une couche de base en polyéthylène haute densité de grade 2, de densité 0,923, ayant une température de ramollissement de 104°C, et une température d'extrusion de 160-180°C ;

— d'autre part, une couche d'EVA indice de fluidité 25 et ayant un taux d'acétate de vinyle de 35% co-extrudé à 120°C.

Le produit fini a une couche de polyéthylène basse densité d'environ 50 micromètres fermement accolée à une couche d'EVA de 20 micromètres.

Ce film adhère parfaitement sur des plaques de verre, polymétacrylate, polycarbonate, lamifiés.

Exemple 3

En utilisant les mêmes moyens d'obtention que ceux précédemment décrits, on prépare un film co-extrudé comprenant un coploymère d'EVA ayant un taux d'acétate de vinyle de 30% en poids, et présentant un indice de fluidité de 65, donc supérieur à celui défini par la présente invention. On constate que ce produit est difficilement extrudable de par sa fluidité trop importante. De plus, la répartition moléculaire au sein de ce produit est très large, et l'on voit apparaitre des molécules à bas poids moléculaire qui provoquent une diminution de la cohésion de la couche auto-adhésive d'une part, et d'autre part, l'apparition de taches sur la surface à protéger.

Exemple 4

On prépare un film co-extrudé comprenant un copolymère d'EVA ayant un taux d'acétate de vinyle de 40% en poids, et présentant un indice de fluidité de 15, inférieur à celui défini par la présente invention. On constate que ce film a perdu quasi-totalement son pouvoir collant. On repète l'opération avec un copolymère d'EVA de pourcentage plus important en poids, en conservant le même indice de fluidité. On n'obtient pas de meilleures qualités d'adhésivité.

Il est donc nécessaire d'associer simultanément un taux en poids d'EVA compatible avec les données de la présente invention et un indice de fluidité également compris dans les limites définies par la présente invention.

Si dans les exemples décrits, on a fait appel à une filière concentrique de co-extrusion, on peut également utiliser une filière plate avec tirage et bobinage conventionnels du film.

Le film de protection provisoire préparé selon l'invention présente de nombreux avantages. On peut citer

— une bonne résistance aux agents atmosphériques tels que l'eau, les ultra-violets et la lumière;

— une grande simplicité de fabrication ne nécessitant pas de faire appel à un procédé particulier;

— d'excellentes propriétés auto-adhésives à température ambiante.

De la sorte, ces films peuvent recevoir de nombreuses applications, en particulier pour la protection de surfaces fragiles, telles que les plaques métalliques (acier inoxydable, aluminium laqué ou anodisé, les plaques de verre, les plaques de matière plastique notamment en polycarbonate, polymétacrylate de méthyle, polystyrène, etc..

## Revendications

1. Film souple auto-adhésif perfectionné, pour la protection temporaire des surfaces fragiles, du type constitué par au moins deux couches superposées accolées co-extrudées :

• l'une de base, en une composition filmogène de matière thermoplastique ;

• l'autre auto-adhésive, en une composition filmogène d'éthylène-vinyle acétate (EVA), compatible avec le polymère de la couche de base, caractérisé en ce que la couche auto-adhésive est constituée par un copolymère filmogène d'EVA présentant :

— d'une part, un taux d'acétate de vinyle compris entre 25 et 40% en poids ;

— d'autre part, un indice de fluidité compris entre 20 et 60.

2. Film auto-adhésif selon la revendication 1, caractérisé en ce que le film de base est en polyéthylène basse densité et en ce que le copolymère de la couche auto-adhésive est un copolymère d'acétate de vinyle et de polyéthylène basse densité.

3. Film auto-adhésif selon la revendication 2, caractérisé en ce que la couche auto-adhésive a un taux d'acétate de vinyle voisin de 30% et un indice de fluidité voisin de 40.

4. Film auto-adhésif selon l'une des revendications 1 à 3, caractérisé en ce que le film de base a une épaisseur comprise entre 25 et 150 micromètres et la couche adhésive entre 5 et 25 micromètres, de préférence au voisinage de 15.

## Patentansprüche

1. Selbstklebende, verbesserte Weichfolie zum zeitweiligen Schutz empfindlicher Oberflächen des Typs bestehend aus mindestens zwei übereinanderliegenden, miteinander verklebten, coextrudierten Schichten :

• eine davon als Grundschicht, bestehend aus einer filmbildenden Zusammensetzung eines thermoplastischen Materials ;

• die andere als selbstklebende Schicht, bestehend aus einer filmbildenden Zusammensetzung aus Ethylen-Vinylacetat (EVA), die mit dem Polymeren der Grundschicht kompatibel ist, dadurch gekennzeichnet, daß die selbstklebende Schicht aus einem filmbildenden EVA-Copolymeren besteht, das :

— einerseits einen Vinylacetatgehalt zwischen 25 und 40 Gew.-% ;

— andererseits einen Fließindex zwischen 20 und 60 aufweist.

2. Selbstklebende Folie nach Anspruch 1, dadurch gekennzeichnet, daß die Grundschicht aus Polyethylen niedriger Dichte besteht und daß Copolymere das der selbstklebenden Schicht eines Copolymeres aus Vinylacetat und Polyethylen niedriger Dichte ist.

3. Selbstklebende Folie nach Anspruch 2, dadurch gekennzeichnet, die selbstklebende Schicht einen Vinylacetatgehalt von etwa 30% und einen Fließindex von etwa 40 aufweist.

4. Selbstklebende Folie nach einem der Ansprüche 1 bis 3, dadurch gekennzeichnet, daß die Grundschicht zwischen 25 und 150 Mikrometer und die Klebeschicht zwischen 5 und 25 Mikrometer, vorzugsweise etwa 15 Mikrometer, stark ist.

## Claims

1. Improved self-adhesive flexible film for temporary protection of fragile surfaces, of the type consisting of at least two coextruded adjoining superposed layers :

— one, a base layer, made of a film-forming composition of thermoplastic material ;

— the other, self-adhesive, made of an ethylenevinyl acetate (EVA) film-forming composition compatible with the polymer of the base layer, characterised in that the self-adhesive layer consists of an EVA film-forming copolymer exhibiting :

— on the one hand, a vinyl acetate content of between 25 and 40% by weight ;

— on the other hand, a melt index of between 20 and 60.

2. Self-adhesive film according to Claim 1, characterised in that the base film is made of low-density polyethylene and in that the copolymer of the self-adhesive layer is a copolymer of vinyl acetate and low-density polyethylene.

3. Self-adhesive film according to Claim 2, characterised in that the self-adhesive layer has a vinyl acetate content in the vicinity of 30% and a melt index in the vicinity of 40.

4. Self-adhesive film according to one of Claims 1 to 3, characterised in that the base film has a thickness of between 25 and 150 micrometres and the adhesive layer between 5 and 25 micrometres, preferably in the vicinity of 15.

**FIG. 1**